# EUROPEAN PATENT APPLICATION

(11) **EP 4 772 919 A1**
(43) Date of publication of application: **08.07.2026**
(21) Application number: 25218285.2
(22) Date of filing: 25.11.2025
(51) Int. Cl.: G02B 6/38

(54) **OPTICAL FIBER CONNECTOR**

(30) Priority: 02.12.2024 CN 202422959928 U
(71) Applicant: AMPHENOL TECHNOLOGY VIETNAM CO., LTD., 850000 Can Giuoc (VN)
(72) Inventor: NGUYEN, TRUONG BAO HUY, 850000 Can Giuoc Town (VN); NGUYEN, CAT VIEN, 850000 Can Giuoc Town (VN); NGUYEN, PHU THANH, 850000 Can Giuoc Town (VN); BIEN, HU'U NH, 850000 Can Giuoc Town (VN)
(74) Representative: Studio Torta S.p.A.

(57) **Abstract**

An optical fiber connector includes a ferrule portion 100, a foot sleeve (400), a clip portion (200), and a quick-removal portion (300). The foot sleeve is fastened to the ferrule portion, and an optical fiber ( 500) passes through the foot sleeve and is connected to another optical fiber inside an adapter. The clip portion is sleeved on one end of the ferrule portion close to the foot sleeve. The quick-removal portion is fastened to the foot sleeve.

## Description

### CROSS-REFERENCE TO RELATED APPLICATIONS

The present application claims priority to Chinese Patent Application No. 202422959928.4, filed on December 02, 2024, the content of all of which is incorporated herein by reference.

### TECHNICAL FIELD

The present disclosure relates to the technical field of optical fiber connectors, in particularly to an optical fiber connector that is easily to be removed from an adapter in a narrow space.

### BACKGROUND

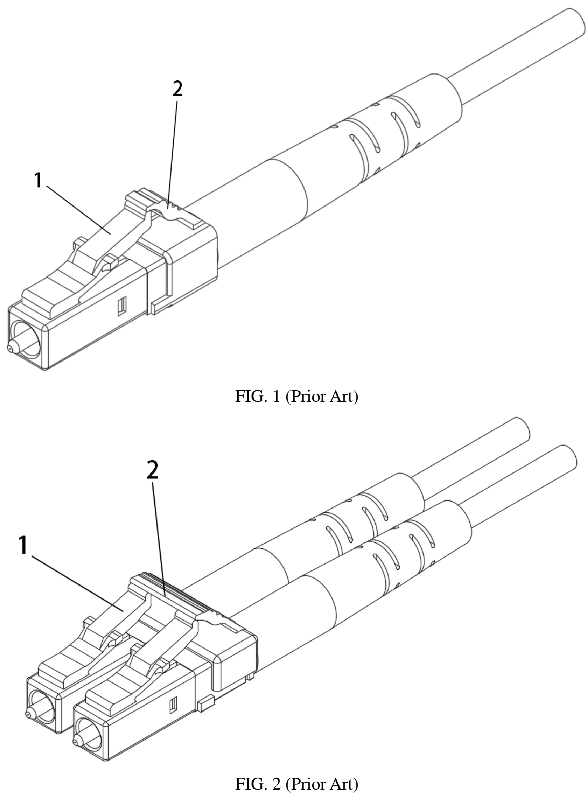

An optical fiber connector can enable segmented splicing of optical fibers and can connect an optical cable and an optical module, allowing an optical signal to be transmitted between the optical cable, the optical fibers, and the optical module through the optical fiber connector, so as to form a continuous optical path, thereby extending a transmission distance of the optical signal. The optical fiber connector generally is matched with and connected to a corresponding adapter to achieve precise splicing of two end surfaces of the optical fibers. FIG. 1 shows an optical fiber connector connected with one optical fiber in the prior art, and FIG. 2 shows an optical fiber connector connected with two optical fibers in the prior art. It can be seen from FIG. 1 and FIG. 2 that the optical fiber connector in the prior art is fastened to the adapter through a locking structure 1. When it is necessary to remove the optical fiber connector from the adapter, the locking structure 1 is detached from the adapter by pressing an elastic buckle 2. In practical applications, for the sake of cleanliness and aesthetics, the matched and connected optical fiber connector and adapter are generally densely arranged, resulting in a narrow space allocated to each optical fiber connector, especially a space above the optical fiber connector is small. This makes it difficult for users to press the elastic buckle when the space above the optical fiber connector in the prior art is occupied, resulting in difficulty in removing the optical fiber connector and the adapter and making it difficult to remove the optical fiber connector and the adapter quickly.

Therefore, the prior art needs to be further improved and enhanced.

### SUMMARY

In view of the above-mentioned defects of the prior art, the present disclosure provides an optical fiber connector to solve the problem that the prior art has difficulty in removing the optical fiber connector and the adapter and cannot achieve quick removal.

To solve the above problem, the present disclosure provides an optical fiber connector, including:
a ferrule portion, where a ferrule is sleeved inside the ferrule portion to be connected to an optical fiber, a top part of the ferrule portion is arranged with a locking member, and the optical fiber connector is fastened to an adapter through the locking member;
a foot sleeve, fastened to the ferrule portion, where the optical fiber passes through the foot sleeve and is connected to the ferrule inside the ferrule portion;
a clip portion, sleeved on one end of the ferrule portion close to the foot sleeve, and including a first space configured to be matched with the ferrule portion and a second space arranged above the first space; and
a quick-removal portion, including a quick-removal portion body and a buckle horizontally arranged at a top part of the quick-removal portion body, where the quick-removal portion body is fastened to the foot sleeve, the buckle passes through the second space of the clip portion and is snap-fitted on the locking member of the ferrule portion, so that when the foot sleeve moves away from the adapter, the buckle drives the locking member to be detached from the adapter, so as to achieve removal of the optical fiber connector and the adapter.

In some embodiments, a top end of the locking member protrudes to form a snap hook, a height of the second space is less than a height of the snap hook, the buckle is an elastic buckle, and after the buckle passes through the second space of the clip portion, the buckle bends upwards to be snap-fitted on the snap hook, so as to achieve a snap-fit connection between the buckle and the locking member.

In some embodiments, the optical fiber connector further includes two optical fibers and two ferrule portions respectively connected to the two optical fibers, a partition wall is vertically arranged inside the clip portion, the partition wall divides the first space into two symmetrical first sub spaces and divides the second space into two symmetrical second sub spaces, and the clip portion is sleeved on the two ferrule portions through the two first sub spaces.

In some embodiments, a snap protrusion is arranged on an inner side wall of the first space of the clip portion, a snap slot is arranged on the ferrule portion corresponding to the snap protrusion of the clip portion, and the snap protrusion is snapped into the snap slot to realize the clip portion being sleeved on the ferrule portion.

In some embodiments, the ferrule portion includes a first housing and a second housing detachably connected together, and the first housing is connected to the second housing to fix the ferrule in a center position;

the first housing is arranged towards the adapter, and the locking member is fixed on a top part of the first housing; and
the second housing is arranged towards the foot sleeve and is fastened to the foot sleeve, and a side wall of the second housing is arranged with the snap slot to be matched with the snap protrusion, so as to realize the clip portion being sleeved on the ferrule portion.

In some embodiments, the quick-removal portion body forms a pair of clamping arms facing the foot sleeve in a vertical direction, the clamping arms are matched with a size of the foot sleeve, and the foot sleeve is clamped between the pair of clamping arms to achieve a clamping connection between the quick-removal portion body and the foot sleeve.

In some embodiments, each clamping arm is arranged with a snap arm protrusion facing the foot sleeve, the foot sleeve is arranged with snap openings respectively corresponding to the snap arm protrusions, the snap arm protrusions are matched with the snap openings to prevent the foot sleeve from rotating after the quick-removal portion body is snapped into the foot sleeve.

In some embodiments, each snap arm protrusion is arranged with an arc-shaped cutout to be adapted to the optical fiber inside the foot sleeve.

In some embodiments, the optical fiber connector further includes two optical fibers and two foot sleeves corresponding to the two optical fibers respectively, a clamping arm is formed on the quick-removal portion body deviating from the ferrule portion in a horizontal direction, and the clamping arm is clamped between the two foot sleeves to achieve a clamping connection between the quick-removal portion body and the foot sleeves.

In some embodiments, the clamping arm includes an insertion portion inserted between the two foot sleeves and a platform portion located at a top part of the insertion portion, and a top part of the platform portion vertically protrudes to form a convex rib for a user to pull the foot sleeves away from the adapter.

The present disclosure provides the optical fiber connector, including: the ferrule portion, the foot sleeve, the clip portion, and the quick-removal portion. The ferrule is sleeved inside the ferrule portion to be connected to the optical fiber, and the top part of the ferrule portion is arranged with the locking member. The optical fiber connector is fastened to the adapter through the locking member. The foot sleeve is fastened to the ferrule portion, and the optical fiber passes through the foot sleeve and is connected to the ferrule inside the ferrule portion. The clip portion is sleeved on one end of the ferrule portion close to the foot sleeve. The clip portion includes a first space configured to be matched with the ferrule portion and a second space arranged above the first space. The quick-removal portion includes a quick-removal portion body and a buckle horizontally arranged at the top part of the quick-removal portion body. The quick-removal portion body is fastened to the foot sleeve. The buckle passes through the second space of the clip portion and is snap-fitted on the locking member of the ferrule portion, so that when the foot sleeve moves away from the adapter, the buckle drives the locking member to be detached from the adapter, so as to achieve the removal of the optical fiber connector and the adapter. In the present disclosure, the buckle is arranged on the quick-removal portion fastened to the foot sleeve, and the buckle is guided by the clip portion to be snap-fitted on the locking member of the ferrule portion. Users only need to pull the foot sleeve away from the adapter to drive the locking member to be detached from the adapter, thus achieving the removal of the optical fiber connector and the adapter. The operation is simple, and even in narrow spaces, the removal of the optical fiber connector and the adapter can be quickly achieved.

### BRIEF DESCRIPTION OF DRAWINGS

In order to provide a clearer explanation of the technical solutions in the embodiments of the present disclosure or in the prior art, a brief description is given to the accompanying drawings required for the description of the present embodiments or the prior art. It is obvious that the accompanying drawings described below are only some embodiments of the present disclosure. For those skilled in the art, other drawings can be obtained based on the present drawings without creative efforts.
FIG. 1 is a schematic diagram of a perspective view of an optical fiber connector connected with a single optical fiber in the prior art.
FIG. 2 is a schematic diagram of a perspective view of an optical fiber connector connected with two optical fibers in the prior art.
FIG. 3 is a schematic diagram of a perspective view of an optical fiber connector connected with a single optical fiber in a first implementation of the present disclosure.
FIG. 4 is a schematic diagram of an exploded view of the optical fiber connector connected with the single optical fiber in the first implementation of the present disclosure.
FIG. 5 is a schematic diagram of a perspective view of a clip portion of the optical fiber connector in the first implementation of the present disclosure.
FIG. 6 is a schematic diagram of a perspective view of a quick-removal portion of the optical fiber connector in the first implementation of the present disclosure.
FIG. 7 is a schematic diagram of a perspective view of the quick-removal portion of the optical fiber connector in a second implementation of the present disclosure.
FIG. 8 is a schematic diagram of a perspective view of the optical fiber connector connected with two optical fibers in the second implementation of the present disclosure.
FIG. 9 is a schematic diagram of an exploded view of the optical fiber connector connected with the two optical fibers in the second implementation of the present disclosure.
FIG. 10 is a schematic diagram of a perspective view of the clip portion of the optical fiber connector in a third implementation of the present disclosure.
FIG. 11 is a schematic diagram of a perspective view of the optical fiber connector connected with the two optical fibers in the third implementation of the present disclosure.
FIG. 12 is a schematic diagram of an exploded view of the optical fiber connector connected with the two optical fibers in the third implementation of the present disclosure.
FIG. 13 is a schematic diagram of a perspective view of the quick-removal portion of the optical fiber connector in the third implementation of the present disclosure.
FIG. 14 is a schematic diagram of a cross-sectional view of the optical fiber connector fastened to an adapter in an implementation of the present disclosure.
FIG. 15 is a schematic diagram of a cross-sectional view of the optical fiber connector removed from the adapter in an implementation of the present disclosure.

### DETAILED DESCRIPTION OF EMBODIMENTS

The present disclosure provides an optical fiber connector. In order to make the purposes, technical solutions, and effects of the present disclosure clearer and more specific, the following provides a further detailed explanation of the present disclosure. It should be understood that the embodiments described here are only used to explain the present disclosure and are not intended to limit the present disclosure.

It should be noted that the terms "center", "up", "down", "left" , "right", "inside", "outside", "perpendicular", "horizontal" and other directional or positional relationships indicated are based on the directional or positional relationships shown in the accompanying drawings, only for the convenience of describing the present disclosure and simplifying the description, and do not indicate or imply that the structure referred to must have a specific orientation or must be constructed in a specific orientation, and cannot be understood as limiting the present disclosure.

In addition, unless there are special limitations on articles in the specification otherwise, "a", "an", "said", and "the" can refer to one or more than one. If there are descriptions related to "first", "second", etc. in the embodiments of the present disclosure, the descriptions of "first", "second", etc. are only for descriptive purposes and cannot be understood as indicating or implying their relative importance or implying the number of technical features indicated. Therefore, the features that are limited to "first", "second", etc. can explicitly or implicitly include at least one of these features. In addition, the technical solutions between various embodiments can be combined with each other, but they must be based on the ability of those skilled in the art to implement them. When the combination of technical solutions is contradictory or impossible to achieve, it should be considered that this combination of technical solutions does not exist and is not within the protection scope required by the present disclosure.

Those skilled in the art can understand that, unless otherwise defined, all terms used here (including technical and scientific terms) have the same meaning as those generally understood by those skilled in the art to which the present disclosure belongs. It should be understood that terms such as those defined in general dictionaries should be understood to have meanings consistent with those in the prior art. Unless specifically defined as here otherwise, the terms are not explained with idealized or overly formal meanings.

In the prior art, users need to manually press a locking structure of an optical fiber connector to remove the optical fiber connector from an adapter. This increases the difficulty of removing the optical fiber connector from the adapter when a space above the optical fiber connector is occupied, making it impossible to achieve quick removal of the optical fiber connector and the adapter. Therefore, the present disclosure discloses an optical fiber connector that can be quickly removed from the adapter even in narrow spaces. A buckle is arranged on a quick-removal portion fastened to a foot sleeve, and a clip portion is configured to guide the buckle to be snap-fitted on a locking member of a ferrule portion. Users only need to pull the foot sleeve away from the adapter to drive the locking member to be detached from the adapter, thereby achieving the removal of the optical fiber connector and the adapter. The operation is simple, and even in narrow spaces, the optical fiber connector and the adapter can be quickly removed.

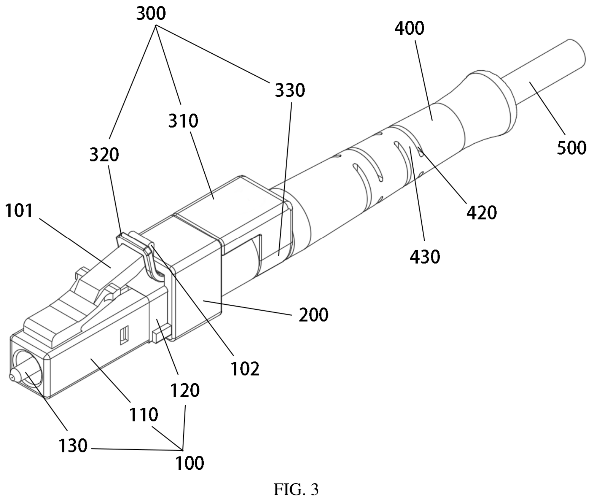

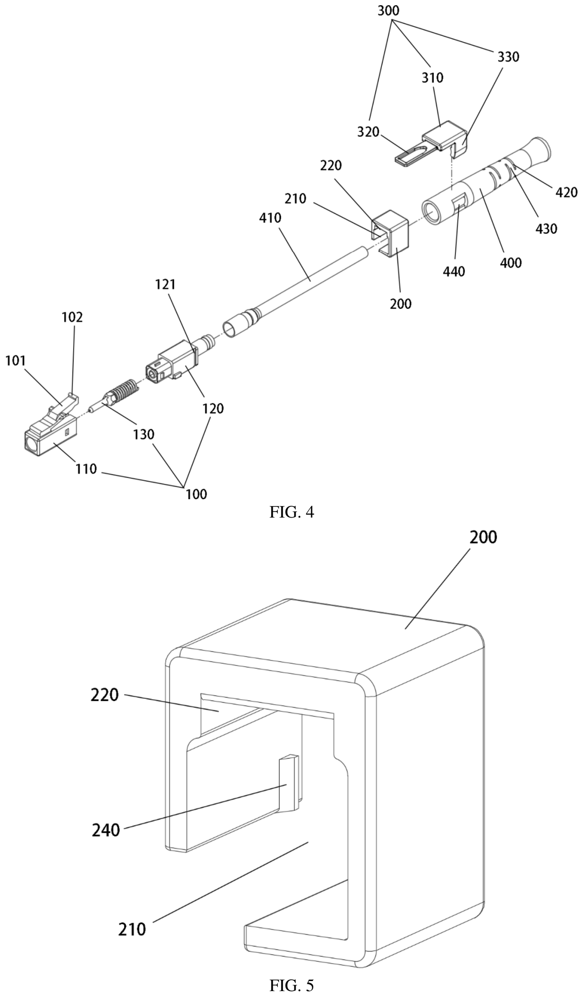

As shown in FIG. 3 and FIG. 4, the optical fiber connector includes a ferrule portion 100, a clip portion 200, a quick-removal portion 300, and a foot sleeve 400. A top part of the ferrule portion 100 is arranged with a locking member 101, and the optical fiber connector is fastened to an adapter through the locking member 101. The ferrule portion 100 is fastened to the foot sleeve 400. An optical fiber passes through the foot sleeve 400 and is connected to a ferrule 130 inside the ferrule portion 100, so as to be connected to another optical fiber inside the adapter through the ferrule 130. The quick-removal portion 300 is fastened to the foot sleeve 400 and is arranged with a buckle 320 extending horizontally towards the ferrule portion 100. The buckle 320 is guided by the clip portion 200 that is sleeved on the ferrule portion 100, so that the buckle 320 is snap-fitted on the locking member 101. In this way, users only need to pull the foot sleeve 400 in a direction away from the ferrule portion 100 (i.e. a direction away from the adapter), then the buckle 320 can drive the locking member 101 to be detached from the adapter, thereby achieving the removal of the optical fiber connector and the adapter. The operation is simple, and even in narrow spaces, the removal of the optical fiber connector and the adapter can be quickly achieved.

Furthermore, as shown in FIG. 4, the ferrule portion 100 includes a first housing 110 and a second housing 120 detachably connected together. After the first housing 110 is connected to the second housing 120, the ferrule 130 is fixed at a center position to ensure that the ferrule 130 is matched with and connected to the optical fiber inside the adapter after the ferrule portion 100 is connected to the adapter. Furthermore, as shown in FIG. 4, the locking member 101 is fixedly arranged on a top part of the first housing 110. The first housing 110 is arranged towards the adapter, and the locking member 101 is fixed on the top part of the first housing 110 and tilted upwards towards the direction away from the adapter, so that when the first housing 110 of the ferrule portion 100 is inserted into the adapter, an upper wall of the locking member 101 is fastened to the adapter, thereby achieving the connection between the optical fiber connector and the adapter.

Furthermore, as shown in FIG. 3 and FIG. 4, a top end of the locking member 101 is arranged with a snap hook 102 that is perpendicular to the locking member 101. When the buckle 320 is guided by the clip portion 200 to be snap-fitted on the locking member 101, the snap hook 102 is hooked onto the buckle 320 to achieve a stable connection between the buckle 320 and the locking member 101, and to ensure that when the buckle 320 moves away from the adapter along with the foot sleeve 400, the locking member 101 moves synchronously to be detached from the adapter, so as to remove the optical fiber connector from the adapter.

Furthermore, the second housing 120 is arranged towards the foot sleeve 400 and is fastened to the foot sleeve 400, receiving the optical fiber passing through the foot sleeve 400. Both the first housing 110 and the second housing 120 are hollow structures, and both have two opened ends. The first housing 110 and the second housing 120 are combined to form the ferrule portion 100, and the ferrule 130 is clamped in the center position. One end of the ferrule 130 is connected to the optical fiber passing through the foot sleeve 400 through the second housing 120, and the other end of the ferrule 130 is connected to the optical fiber inside the adapter through the first housing 110, thereby connecting the two optical fibers together.

Optionally, the first housing 110 is connected to the second housing 120 by means of a snap-in connection. In one implementation, a side wall of the first housing 110 is opened to form a housing slot, and a side wall of the second housing 120 is arranged with a housing protrusion corresponding to the housing slot. The snap-in connection between the first housing 110 and the second housing 120 is achieved by the housing protrusion being snapped into the housing slot. In one implementation, the top part of the first housing 110 is arranged with a guide notch, and the second housing 120 is arranged with a guide protrusion corresponding to the guide notch. The guide protrusion is matched with the guide notch to ensure that the first housing 110 and the second housing 120 are in the snap-in connection in a specific direction, reducing the difficulty of operation and improving the stability of installation.

Furthermore, as shown in FIG. 4, a side wall of the second housing 120 is arranged a snap slot 121 in a vertical direction, so as to cooperate to facilitate a snap-in connection between the ferrule portion 100 and the clip portion 200.

Furthermore, as shown in FIG. 3, the clip portion 200 is sleeved on one end of the ferrule portion 100 close to the foot sleeve 400, and guides the buckle 320 to be snap-fitted on the snap hook 102 arranged on the locking member 101. The clip portion 200 is an annular structure and its interior is adapted to the shape and size of the ferrule portion 100, so as to ensure that the clip portion 200 can be stably sleeved on the ferrule portion 100. Furthermore, the clip portion 200 includes a first space 210 that is matched with the ferrule portion 100, and a second space 220 that is located above the first space 210 and matched with the dimension of the buckle 320. The height of the second space 220 is smaller than the height of the snap hook 102, so that the buckle 320 needs to bend upwards to be snap-fitted on the snap hook 102 after passing through the second space 220. When the foot sleeve 400 is pulled to make the buckle 320 move synchronously, the snap hook 102 moves downwards under force, causing an upper surface of the locking member 101 to be detached from the adapter, achieving the removal of the optical fiber connector and the adapter. Optionally, a side wall of a top part of the first space 210 protrudes to form the second space 220 with a smaller lateral dimension, such that the dimension of the second space 220 is smaller than the dimension of the ferrule portion 100, ensuring that the ferrule portion 100 is fixed within the first space 210.

Furthermore, as shown in FIG. 5, snap protrusions 240 are respectively arranged on two inner side walls of the first space 210, and the snap protrusions 240 correspond to the snap slots 121, so that when the clip portion 200 is sleeved on the ferrule portion 100, the snap protrusions 240 can be snapped into the snap slots 121 to achieve the fixed snap-in connection between the clip portion 200 and the ferrule portion 100, ensuring overall connection stability. Optionally, the clip portion 200 is arranged with a fracture to form an annular structure with an opening, so as to facilitate the installation of the clip portion 200 onto the ferrule portion 100, and to facilitate the disassembly of the clip portion 200 from the ferrule portion 100.

Furthermore, as shown in FIG. 4, the quick-removal portion 300 is fastened to the foot sleeve 400, where the quick-removal portion 300 includes a quick-removal portion body 310 and the buckle 320 fixed on a top part of the quick-removal portion body 310. The buckle 320 is a horizontally arranged buckle that extends towards the ferrule portion 100 in a horizontal direction. Furthermore, the buckle 320 is an elastic buckle. After the quick-removal portion 300 is fastened to the foot sleeve 400, the buckle 320 passes through the clip portion 200 and bends upwards to be snap-fitted on the locking member 101, achieving a snap-fit connection between the buckle 320 and the locking member 101. Furthermore, by hooking the snap hook 102 at the top end of the locking member 101 with the buckle 320, when the buckle 320 moves away from the locking member 101, the buckle 320 automatically applies a downward force to the locking member 101, thereby facilitating the detachment of the upper surface of the locking member 101 from the adapter and achieving the removal of the optical fiber connector and the adapter.

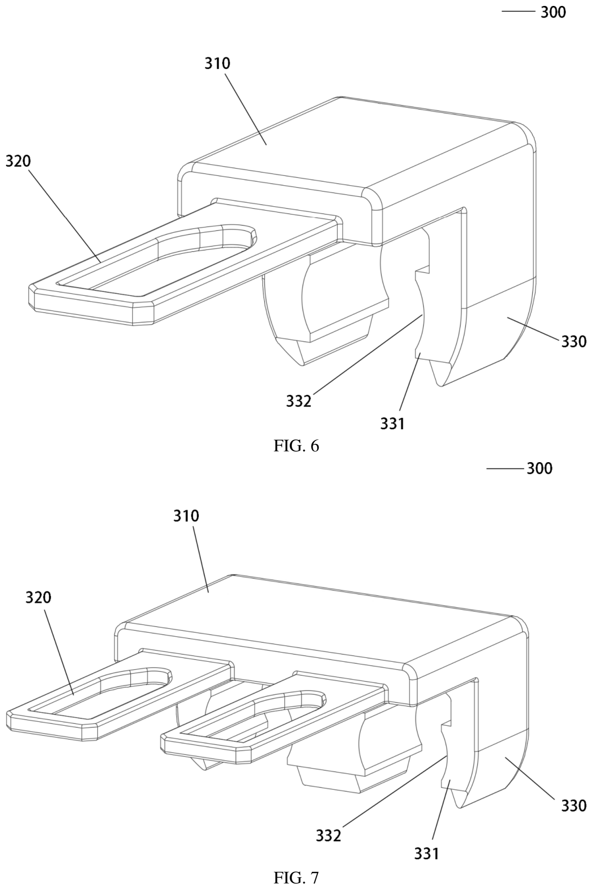

In one implementation, as shown in FIG. 4 and FIG. 6, the quick-removal portion body 310 extends in the vertical direction towards the foot sleeve 400 to form a pair of clamping arms 330. Two opposite sides of the pair of clamping arms 330 are matched with the size of an outer surface of the foot sleeve 400. The foot sleeve 400 is clamped between the pair of clamping arms 330 to achieve a clamping connection between the quick-removal portion body 310 and the foot sleeve, thereby clamping the foot sleeve 400 on the quick-removal portion 300.

Furthermore, as shown in FIG. 6, two opposite sides of the pair of clamping arms 330 are respectively arranged with snap arm protrusions 331. The snap arm protrusions 331 are snapped into the foot sleeve 400 to increase the stability of the connection between the quick-removal portion 300 and the foot sleeve 400, and ensure that the foot sleeve 400 does not rotate relative to the quick-removal portion 300 after the quick-removal portion 300 is snapped into the foot sleeve 400. As shown in FIG. 4, the foot sleeve 400 is arranged with snap openings 440, which are through holes and matched with the size of the snap arm protrusions 331. After the quick-removal portion body 310 is snapped into the foot sleeve 400, the snap arm protrusion 331 are inserted into the snap opening 440 to ensure the stability of the quick-removal portion 300 and the foot sleeve 400 after the snap-in connection. Furthermore, as shown in FIG. 6, each snap arm protrusion 331 is provided with an arc-shaped cutout 332, which corresponds to the shape of the optical fiber passing through the foot sleeve 400. After the snap arm protrusions 331 are inserted into the snap openings 440, the arc-shaped cutouts 332 contact and fit the optical fiber without causing squeezing, ensuring the stability of the optical fiber inside the foot sleeve 400 and avoiding damage to the optical fiber.

Furthermore, as shown in FIG. 4, the foot sleeve 400 is a hollow cylindrical structure, with a plurality of cut notches 420 radially arranged on a surface of the foot sleeve 400. Each cut notch 420 extends along a circumference of the foot sleeve 400 and forms a rib 430 between adjacent cut notches 420. Using the cut notch 420 to form the rib 430 on the surface of the foot sleeve 400, increases a frictional force on the surface of the foot sleeve 400, making it easier for users to pull the foot sleeve 400 to remove the optical fiber connector from the adapter.

In one implementation, as shown in FIG. 4, the foot sleeve 400 is further arranged with an optical fiber sleeve tube 410, which is sleeved inside the foot sleeve 400 and has one end fastened to the second housing 120 of the ferrule portion 100. The optical fiber passes through the foot sleeve 400 by the optical fiber sleeve tube 410, and is connected to the ferrule 130 in the ferrule portion 100.

Therefore, the optical fiber connector disclosed in the present disclosure can be removed from the adapter by a specific structural arrangement. Users only need to pull the foot sleeve to move away from the adapter, which can remove the optical fiber connector from the adapter and can achieve convenient and quick removal operation even in narrow spaces.

In practical applications, it is often necessary to parallel multiple optical fibers. For multiple optical fibers, the optical fiber connector disclosed in the present disclosure can achieve quick removal from the adapter. Taking two optical fibers as an example, a deformation setting of the optical fiber connector disclosed in the present disclosure is explained in conjunction with following embodiments. The arrangement of the ferrule portion 100 and the foot sleeve 400 remains unchanged, and only the corresponding number of ferrule portions 100 and the corresponding number of foot sleeves 400 are increased according to the change in the number of optical fibers, where specific settings are not repeated below.

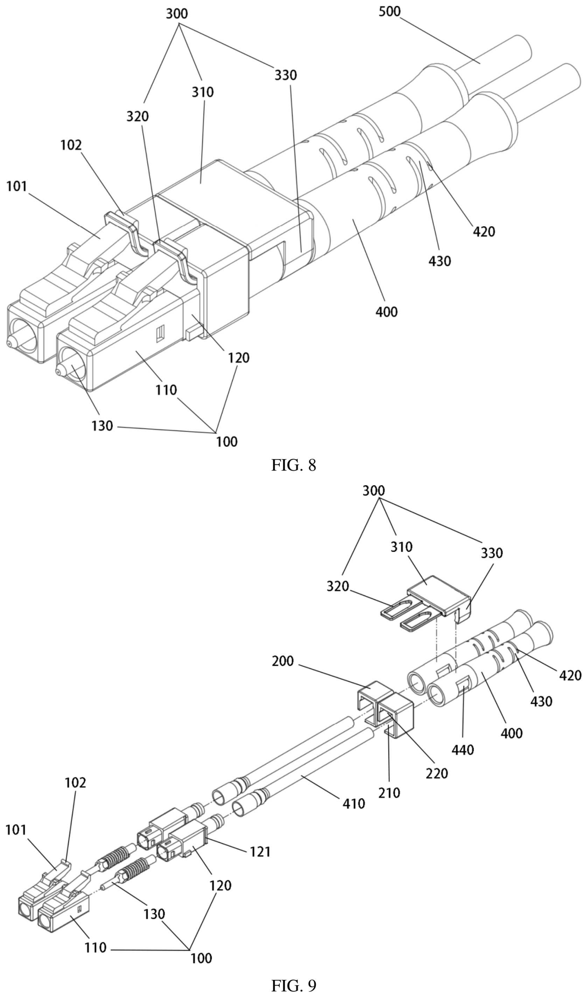

In a first embodiment, as shown in FIG. 8 and FIG. 9, for the case of two optical fibers, two clip portions 200 are respectively sleeved on the corresponding ferrule portions 100. At this time, a part of the quick-removal portion 300 corresponding to the clip portions 200 is extended to form two parallel buckles 320. The two parallel buckles 320 pass through the corresponding the clip portions 200 respectively, and under the guidance of the clip portions 200, are respectively snap-fitted on the locking members 101 of the corresponding ferrule portions 100, ensuring that when the foot sleeve 400 is pulled, the buckles 320 simultaneously drive the locking members 101 of two ferrule portions 100 to move, so that the two locking members 101 are simultaneously detached from the adapter, achieving removing the optical fiber connector from the adapter.

Furthermore, in the present embodiment, as shown in FIG. 7, two pairs of clamping arms 330 are formed on the quick-removal portion body 310 of the quick-removal portion 300, and two clamping arms 330 in each pair of clamping arms 330 are opposite to each other. One clamping arm of one pair of clamping arms and another clamping arm of the other pair of clamping arms 330 adjacent to the one clamping arm are back-to-back integrated as a whole, and are arranged corresponding to a gap between the two foot sleeves 400, so that the two foot sleeves 400 are respectively clamped between the two pairs of clamping arms 330. Furthermore, the arrangement of the clamping arms 330 remains unchanged, and there are also snap arm protrusions 331 that are matched with the snap openings 440 of the foot sleeves 400, ensuring that any one of the foot sleeves 400 snapped between its corresponding one pair of clamping arms 330 do not rotate. At the same time, each snap arm protrusion 331 is provided with the arc-shaped cutout 332 to avoid damage to the optical fibers inside the foot sleeves 400.

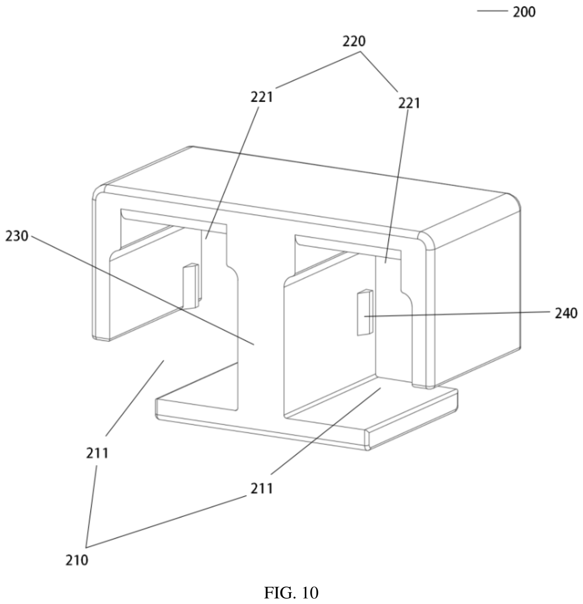

In a second embodiment, the arrangement of the clip portion 200 is replaced, one clip portion 200 is sleeved on two ferrule portions 100, and guides the buckles 320 to be respectively snap-fitted on the locking members 101 of the ferrule portions 100. As shown in FIG. 10, a partition wall 230 is arranged inside the clip portion 200 and is located at a middle position of the clip portion 200. The partition wall 230 divides the first space 210 inside the clip portion 200 into two symmetrical first sub spaces 211, and divides the second space 220 inside the clip portion 200 into two symmetrical second sub spaces 221. The first sub spaces 211 and the ferrule portions 100 are in one-to-one correspondence, so that the clip portion is sleeved on two ferrule portions 100 through the two first sub spaces 211 respectively. The second sub spaces 221 and the buckles 320 are in one-to-one correspondence, so that the buckles 320 are guided by the two second sub spaces 221 to be snap-fitted on the corresponding locking members 101 of the ferrule portions 100 respectively. This ensures that when the foot sleeves 400 are pulled, the buckles 320 simultaneously drive the locking members 101 of two ferrules 100 to move, causing the two locking members 101 to be detached from the adapter at the same time, achieving the removal of the optical fiber connector and the adapter.

Furthermore, in the present embodiment, an inner wall of a top part of each first sub space 211 protrudes inwards to form each second sub space 221, so as to ensure that the corresponding ferrule portions 100 are sleeved and fixed in the first sub spaces 211. The inner wall of each first sub space 211 is arranged with the snap protrusion 240 to be matched with the snap slot 121 on the second housing 120 corresponding the ferrule portion 100, ensuring the stability of the snap-in connection of the clip portion 200 and the two ferrule portions 100.

Furthermore, in the present embodiment, the quick-removal portion 300 adopts the arrangement shown in FIG. 7, with two parallel buckles 320 arranged. The buckles 320 correspond to the two second sub spaces 221 inside the clip portion 200 respectively, so as to be guided by the second sub spaces 221 to be snap-fitted on the corresponding locking members 101 of the ferrule portions 100. Furthermore, two pairs of clamping arms 330 are formed on the quick-removal portion body 310, with two clamping arms 330 in each pair of clamping arms 330 facing each other. One clamping arm of one pair of clamping arms and another clamping arm of the other pair of clamping arms 330 adjacent to the one clamping arm are back-to-back integrated as a whole, and both correspond to the gap between the two foot sleeves 400 to snap the two foot sleeves 400 between the two pairs of clamping arms 330, ensuring that after the foot sleeves 400 are pulled, the two buckles 320 synchronously drive the locking members 101 on the two ferrule portions 100 to move, so that the two locking members 101 are simultaneously detached from the adapter, achieving the removal of the optical fiber connector and the adapter.

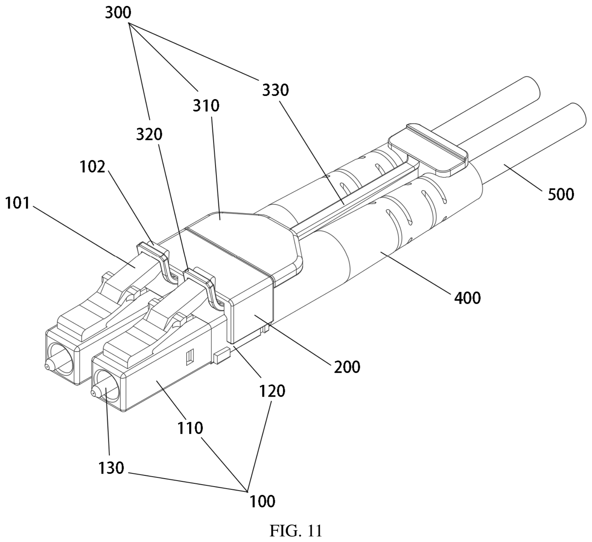

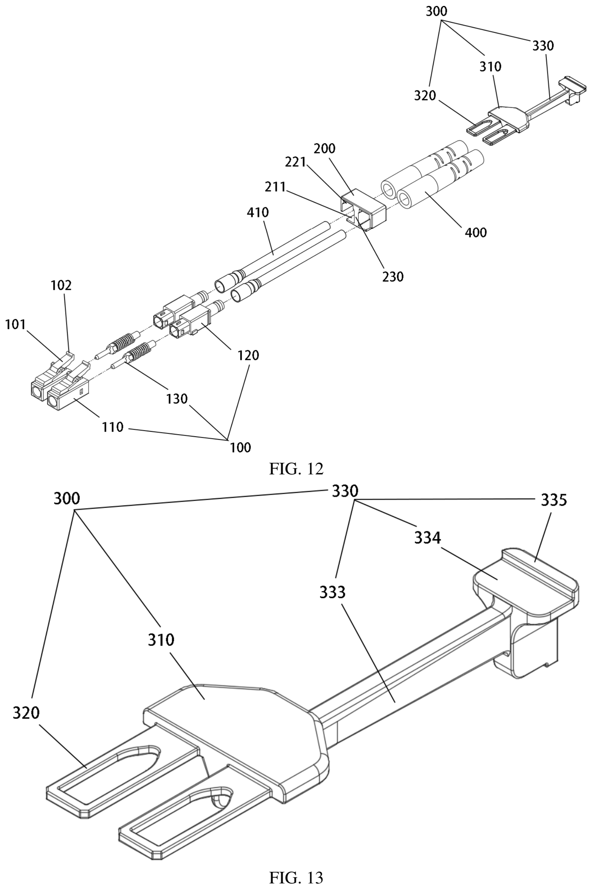

In a third embodiment, as shown in FIG. 11 and FIG. 12, the arrangement of the clip portion 200 is the same as that in the second embodiment, and the arrangement of the quick-removal portion 300 is replaced. The clip portion 200 forms two first sub spaces 211 and two second sub spaces 221 through the partition wall 230, so that the clip portion 200 can be simultaneously sleeved on two ferrule portions 100, and guide two buckles 320 to be respectively snap-fitted on the corresponding locking members 101 on the ferrule portions 100. Furthermore, as shown in FIG. 13, two parallel buckles 320 are arranged on the quick-removal portion 300. At the same time, the quick-removal portion body 310 deviates from the ferrule portions 100 in the horizontal direction to form one clamping arm 330. The clamping arm 330 corresponds to the gap between two foot sleeves 400. The clamping arm 330 is clamped between the two foot sleeves 400 to achieve the clamping connection between the quick-removal portion body 310 and the foot sleeves 400. As shown in FIG. 11 and FIG. 12, the clamping arm 330 includes an insertion portion 333, a platform portion 334, and a convex rib 335. The insertion portion 333 is a wedge-shaped structure, corresponds to the gap between two foot sleeves 400, and is inserted between two foot sleeves 400. The platform portion 334 is arranged on a top part of the insertion portion 333, is arranged horizontally, and covers the surfaces of two foot sleeves 400. The convex rib 335 is perpendicularly arranged on the platform portion 334 to provide a force-applying point when users want to pull the foot sleeves 400, making it convenient for users to apply force to pull the foot sleeves 400 away from the adapter, so as to drive the locking members 101 to be detached from the adapter through the buckles 320, thereby achieving the removal of the optical fiber connector and adapter. The operation is simple, and even in narrow spaces, the removal of the optical fiber connector and adapter can be quickly achieved.

A mechanism of the removal of the optical fiber connector disclosed in the present disclosure and the adapter is explained in conjunction with the accompanying drawings.

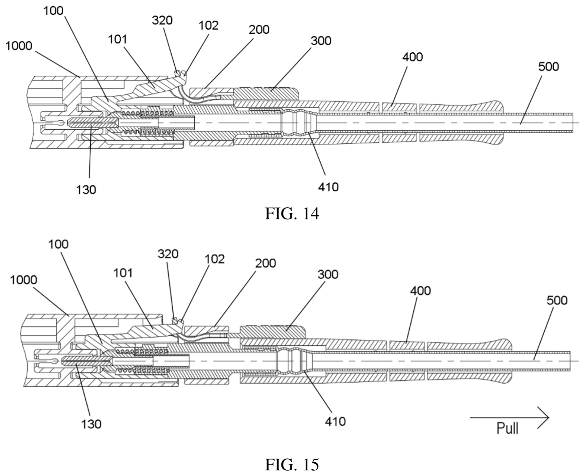

As shown in FIG. 14, when the optical fiber connector disclosed in the present disclosure is connected to the adapter 1000, the optical fiber 500 passes through the foot sleeve 400 through the optical fiber sleeve tube 410 and then is connected to the ferrule 130 inside the ferrule portion 100, and is connected to the optical fiber inside the adapter 1000 through the ferrule 130. At this time, the locking member 101 on the ferrule portion 100 is fastened and fixed to the adapter 1000, achieving the fixed connection between the optical fiber connector and the adapter 1000. At this time, the buckle 320 on the quick-removal portion 300 passes through the clip portion 200 and then is snap-fitted on the locking member 101. Under the guidance of the clip portion 200, the buckle 320 first extends downwards and then bends upwards to hook onto the snap hook 102 at the top end of the locking member 101. As shown in FIG. 15, when it is necessary to remove the optical fiber connector from the adapter 1000, it only needs to simply pull the foot sleeve 400 in the direction away from the adapter 1000 (i.e. the right in the FIG. 15). At this time, the buckle 320 and the quick-removal portion 300 synchronously follow the foot sleeve 400 to move to the right. The buckle 320 hooks onto the snap hook 102 and drives the locking member 101 to move. At this time, under the guidance of the clip portion 200, the buckle 320 needs to first move downwards and then move to the right, so as to apply a downward pressure to the locking member 101, causing the locking member 101 to be detached from the adapter 1000, thereby achieving the removal of the optical fiber connector and the adapter and the removal of the ferrule 130 and the optical fiber inside the adapter 1000. Due to that it only needs to pull the optical fiber connector in the horizontal direction, even in situations where the space around the optical fiber connector is narrow, the removal of the optical fiber connector and the adapter can still be easily and quickly achieved, with simple operation and easy application.

In summary, the present disclosure provides the optical fiber connector, including: the ferrule portion, the foot sleeve, the clip portion, and the quick-removal portion. The ferrule is sleeved inside the ferrule portion to be connected to the optical fiber, and the top part of the ferrule portion is arranged with the locking member. The optical fiber connector is fastened to the adapter through the locking member. The foot sleeve is fastened to the ferrule portion, and the optical fiber passes through the foot sleeve and is connected to the ferrule inside the ferrule portion. The clip portion is sleeved on one end of the ferrule portion close to the foot sleeve. The clip portion includes a first space configured to be matched with the ferrule portion and a second space arranged above the first space. The quick-removal portion includes a quick-removal portion body and a buckle horizontally arranged at the top part of the quick-removal portion body. The quick-removal portion body is fastened to the foot sleeve. The buckle passes through the second space of the clip portion and is snap-fitted on the locking member of the ferrule portion, so that when the foot sleeve moves away from the adapter, the buckle drives the locking member to be detached from the adapter, so as to achieve the removal of the optical fiber connector and the adapter. In the present disclosure, the buckle is arranged on the quick-removal portion fastened to the foot sleeve, and the buckle is guided by the clip portion to be snap-fitted on the locking member of the ferrule portion. Users only need to pull the foot sleeve away from the adapter to drive the locking member to be detached from the adapter, thus achieving the removal of the optical fiber connector and the adapter. The operation is simple, and even in narrow spaces, the removal of the optical fiber connector and the adapter can be quickly achieved.

The above is only some embodiments of the present disclosure and is not intended to limit the present disclosure. Any modifications, equivalent substitutions, improvements, etc. made within the spirits and principles of the present disclosure should be included in the protection scope of the present disclosure.

## Claims

1. An optical fiber connector, comprising:
a ferrule portion, wherein a ferrule is sleeved inside the ferrule portion to be connected to an optical fiber, a top part of the ferrule portion is arranged with a locking member, and the optical fiber connector is fastened to an adapter through the locking member;
a foot sleeve, fastened to the ferrule portion, wherein the optical fiber passes through the foot sleeve and is connected to the ferrule inside the ferrule portion;
a clip portion, sleeved on one end of the ferrule portion close to the foot sleeve, and comprising a first space configured to be matched with the ferrule portion and a second space arranged above the first space; and
a quick-removal portion, comprising a quick-removal portion body and a buckle horizontally arranged at a top part of the quick-removal portion body, wherein the quick-removal portion body is fastened to the foot sleeve, the buckle passes through the second space of the clip portion and is snap-fitted on the locking member of the ferrule portion, so that when the foot sleeve moves away from the adapter, the buckle drives the locking member to be detached from the adapter, so as to achieve removal of the optical fiber connector and the adapter.

2. The optical fiber connector according to claim 1, wherein a top end of the locking member protrudes to form a snap hook, a height of the second space is less than a height of the snap hook, the buckle is an elastic buckle, and after the buckle passes through the second space of the clip portion, the buckle bends upwards to be hooked onto the snap hook, so as to achieve a snap-fit connection between the buckle and the locking member.

3. The optical fiber connector according to claim 2, wherein the optical fiber connector comprises two optical fibers and two ferrule portions respectively connected to the two optical fibers, a partition wall is vertically arranged inside the clip portion, the partition wall divides the first space into two symmetrical first sub spaces and divides the second space into two symmetrical second sub spaces, and the clip portion is sleeved on the two ferrule portions through the two first sub spaces.

4. The optical fiber connector according to claim 2, wherein a snap protrusion is arranged on an inner side wall of the first space of the clip portion, a snap slot is arranged on the ferrule portion corresponding to the snap protrusion of the clip portion, and the snap protrusion is snapped into the snap slot to realize the clip portion being sleeved on the ferrule portion.

5. The optical fiber connector according to claim 4, wherein the ferrule portion comprises a first housing and a second housing detachably connected together, and the first housing is connected to the second housing to fix the ferrule in a center position; the first housing is arranged towards the adapter, and the locking member is fixed on a top part of the first housing; and
the second housing is arranged towards the foot sleeve and is fastened to the foot sleeve, and a side wall of the second housing is arranged with the snap slot to be matched with the snap protrusion, so as to realize the clip portion being sleeved on the ferrule portion.

6. The optical fiber connector according to claim 1, wherein the quick-removal portion body forms a pair of clamping arms facing the foot sleeve in a vertical direction, the clamping arms are matched with a size of the foot sleeve, and the foot sleeve is clamped between the pair of clamping arms to achieve a clamping connection between the quick-removal portion body and the foot sleeve.

7. The optical fiber connector according to claim 6, wherein each clamping arm is arranged with a snap arm protrusion facing the foot sleeve, the foot sleeve is arranged with snap openings respectively corresponding to the snap arm protrusions, the snap arm protrusions are matched with the snap openings to prevent the foot sleeve from rotating after the quick-removal portion body is snapped into the foot sleeve.

8. The optical fiber connector according to claim 7, wherein each snap arm protrusion is arranged with an arc-shaped cutout to be adapted to the optical fiber inside the foot sleeve.

9. The optical fiber connector according to claim 1, wherein the optical fiber connector comprises two optical fibers and two foot sleeves corresponding to the two optical fibers respectively, a clamping arm is formed on the quick-removal portion body deviating from the ferrule portion in a horizontal direction, and the clamping arm is clamped between the two foot sleeves to achieve a clamping connection between the quick-removal portion body and the foot sleeves.

10. The optical fiber connector according to claim 9, wherein the clamping arm comprises an insertion portion inserted between the two foot sleeves and a platform portion located at a top part of the insertion portion, and a top part of the platform portion vertically protrudes to form a convex rib for a user to pull the foot sleeves away from the adapter.
